# EUROPÄISCHE PATENTANMELDUNG

(11) **EP 1 083 383 A1**
(43) Veröffentlichungstag der Anmeldung: **14.03.2001**
(21) Anmeldenummer: 00119557.7
(22) Anmeldetag: 07.09.2000
(51) Int. Cl.: F21V 8/00

(54) **Leuchtkörper für durchleuchtungsfähige Bilder**

(30) Priorität: 07.09.1999 DE 19942513
(71) Anmelder: Karl, Gerhard, Dipl.-Phys., D-97267 Himmelstadt (DE)
(72) Erfinder: Karl, Gerhard, Dipl.-Phys., D-97267 Himmelstadt (DE)
(74) Vertreter: Pöhner, Wilfried Anton, Dr.

(57) **Zusammenfassung**

Die Erfindung betrifft einen Leuchtkörper für durchleuchtungsfähige Bilder, wie Filmbetrachter, Hinterbildleuchte, Zeichnungsdurchleuchter oder Lichtschild, mit einer lichtdurchlässigen, im wesentlichen planparallelen Platte, in die das Licht einer oder mehrerer Lichtquellen in Randnähe eingekoppelt wird und in der sich das Licht unter Vielfachreflexion an Ober- und Unterseite der Platte verteilt, wobei die Ober- und/oder Unterseite eine lichtbrechende rasterförmige Oberflächenstruktur zum stellenweise definierten Lichtaustritt aufweist, die sich mit zunehmendem Abstand von der Einkoppelstelle vergrößert, wobei - oberhalb der Plattenoberseite eine mit einer Streuschicht versehene Leuchtfläche befestigt ist, - die Lichtquelle (5) zur Einkoppelstelle beabstandet ist, - ein lichtleitendes Medium (8) zwischen Einkoppelstelle und Lichtquelle (5) angeordnet ist.

## Beschreibung

Die Erfindung betrifft einen Leuchtkörper für durchleuchtungsfähige Bilder, wie Filmbetrachter, Hinterbildleuchte, Zeichnungsdurchleuchter oder Lichtschild, mit einer lichtdurchlässigen, im wesentlichen planparallelen Platte, in die das Licht einer oder mehrerer Lichtquellen in Randnähe eingekoppelt wird und in der sich das Licht unter Vielfachreflexion an Ober- und Unterseite der Platte verteilt, wobei die Ober- und/oder Unterseite eine lichtbrechende rasterförmige Oberflächenstruktur zum stellenweise definierten Lichtaustritt aufweist, die sich mit zunehmendem Abstand von der Einkoppelstelle vergrößert.

Derartige Leuchtkörper dienen der rückwärtigen Beleuchtung durchleuchtungsfähiger Vorlagen; sie werden beispielsweise als Filmbetrachter in Fotolabors, im graphischen Gewerbe und Fotogeschäften eingesetzt, wo sie es Personal und Kunden ermöglichen, Filmmaterial wie Negative und Diapositive zu betrachten und Einzelheiten darauf zu erkennen. Im medizinischen Bereich unterstützen sie den Arzt bei der Auswertung von Röntgenaufnahmen. Weitere Einsatzgebiete sind Zeichnungsdurchleuchter oder sonstige technische Hinterleuchtungen und Licht- oder Leuchtschilder, die als bei Dunkelheit auffällige Verkehrsschilder, Hinweistafeln und Werbemittel Verwendung finden. Schließlich dienen sie auch zur rückwärtigen Beleuchtung großformatiger Plakate, wie sie insbesondere für Werbezwecke zunehmend Verbreitung finden, aber auch als künstlerisches Gestaltungsmittel eingesetzt werden.

Ein gattungsgemäßer Leuchtkörper ist aus der Patentschrift DE 32 23 706 C2 bekannt. Sie beschreibt eine lichtdurchlässige planparallele Platte, an deren Schmalseite oder Kante Lichtquellen angeordnet sind, deren Licht in die Platte eintritt und sich dort durch Vielfachreflexionen zwischen Ober- und Unterseite verteilt. An ihrer Ober- und/oder Unterseite besitzt die Platte eine lichtbrechende, rasterförmige Oberflächenstruktur, an der das Licht stellenweise dosiert austritt und eine mit einer Streuschicht zur Vergleichmäßigung des einfallenden Lichtes versehene Leuchtfläche beleuchtet. Die Rasterdichte der Oberflächenstruktur ist dabei so gewählt, daß sie mit zunehmendem Abstand von der Lichtquelle größer wird, um eine gleichmäßige Ausleuchtung der Leuchtfläche zu erzielen. Von der gleichmäßigen Ausleuchtung der Leuchtfläche ist aber derjenige Teil des Leuchtkörpers ausgenommen, an dem die verwendeten Lichtquellen sitzen. Wird als Lichtquelle beispielsweise eine längs einer Kante des Leuchtkörpers verlaufenden Leuchtstoffröhre eingesetzt, so bleiben die Umgebungen der angrenzenden Ecken des Leuchtkörpers dunkel, an denen die nichtleuchtenden Sockel der Leuchtstoffröhre sitzen. Die dunklen Zonen setzen sich längs der senkrecht zur Leuchstoffröhre verlaufenden Kanten des Leuchtkörpers fort, bis in einiger Entfernung zur Leuchtstoffröhre eine gleichmäßige Ausleuchtung der Leuchtfläche über die volle Breite des Leuchtkörpers erzielt wird. Ist man daher an einer möglichst homogenen Ausleuchtung der nutzbaren Leuchtfläche interessiert, so müssen die äußeren Bereiche des Leuchtkörpers mit einer Art Rahmen abgedeckt werden. Auf diese Weise erhält man Leuchtkörper, deren Leuchtflächen zwar sehr homogen leuchten, deren Abmessungen aber deutlich größer als die nutzbaren Leuchtflächen sind. Dies erhöht einerseits den Platzbedarf der Leuchtkörper und macht es andererseits unmöglich, durch Kombination mehrerer Leuchtkörper große vollflächige beleuchtete Nutzflächen zu erhalten.

Hiervon ausgehend liegt der Erfindung das Problem zugrunde, einen Leuchtkörper so zu gestalten, daß die gesamte Leuchtfläche bis hin zum Rand des Leuchtkörpers gleichmäßig ausgeleuchtet ist und die Möglichkeit besteht, mehrere Leuchtkörper unmittelbar aneinander anstoßend nebeneinander zu plazieren.

Diese Aufgabe wird erfindungsgemäß dadurch gelöst, daß die Lichtquelle zur Einkoppelstelle beabstandet ist und ein lichtleitendes Medium zwischen Einkoppelstelle und Lichtquelle angeordnet ist.

Der Kerngedanke der Erfindung besteht darin, daß die Lichtquelle im Abstand zur Einkoppelstelle angeordnet ist, und sich ein lichtleitendes Medium zwischen der Lichtquelle und der Einkoppelstelle befindet. Damit wird erreicht, daß das von der Lichtquelle ausgesandte Licht sich im Medium auf die volle Breite des Leuchtkörpers aufweitet und an der Einkoppelstelle in die Platte eintritt und vollständig ausleuchtet. Damit wird erreicht, daß auch die Randbereiche des Leuchtkörpers, an denen das bereits aufgeweitete Licht eingekoppelt wird, vollständig ausgeleuchtet sind und genutzt werden können. Die genaue Ausgestaltung des lichtleitenden Mediums ist erfindungsgemäß unerheblich und kann, wie es weiter unten beispielhaft dargestellt ist, ausgeführt werden. Zur Einkopplung, besonders wenn die Lichtquelle unter dein Leuchtkörper angeordnet ist, können die Stirnseiten der Platten gegenüber der Vertikalen geneigt sein, bzw. das Licht mit geneigten Reflektoren auf die vertikalen Stirnseiten gerichtet werden, wie es ebenfalls weiter unten vorgeschlagen ist. Dabei können auch mehrere Reflektoren verwendet werden. Auch kann eine Stirnseite einer planparallelen Platte als Reflektor ausgebildet werden, d. h. in einem geeigneten Winkel zum einfallenden Lichtstrom geneigt und mit einer Reflexionsschicht auf der Rückseite versehen sein.

Der Vorteil der Erfindung besteht darin, daß die gesamte Fläche der Platte, die den Leuchtkörper bildet, mit dem randseitig eingekoppelten Licht gleichmäßig ausgeleuchtet ist, und sie auf ihrer gesamten Fläche nutzbar ist.

Vorteilhafte Ausgestaltungen der Erfindung sind Gegenstand von Unteransprüchen.

Die aus der Platte austretenden Lichtstrahlen treffen auf eine Streuschicht, die ihrerseits zu einer weiteren Vergleichmäßigung des Lichtes dient, und ein praktisch kontinuierlicher Lichtaustritt auf der Leuchtfläche erhalten wird. Die Streuschichtt mit der Leuchtfläche kann auf der Ober- und/oder Unterseite der Platte angebracht werden.

Es wird vorgeschlagen, die Lichtquelle unterhalb der Platte anzuordnen und ein im wesentlichen parallel zur Platte verlaufendes lichtleitendes Medium ebenfalls unterhalb der Platte anzuordnen, wobei das emittierte Licht durch das Medium geleitet und beispielsweise mit Hilfe von Reflektoren umgelenkt wird, und randseitig in die Platte eintritt, wobei es erfindungsgemäß unerheblich ist, ob das Licht von unten in die Platte eintritt, diese also z. B. über eine gegen die Vertikale geneigte Stirnfläche verfügt, oder ob das Licht mit Hilfe von Reflektoren umgelenkt wird und seitlich durch die senkrechte Stirnseite eintritt. Mit der Anordnung des Mediums und der Lichtquelle unterhalb der Platte wird erreicht, daß mehrere Leuchtkörper unmittelbar aneinander anstoßend nebeneinander gelegt werden können, um beispielsweise eine wesentlich größere, durchgehende Leuchtfläche zu erhalten. Der Leuchtkörper kann vom Fachmann so ausgeführt sein, daß seine Grundfläche genau der Fläche der Platte entspricht.

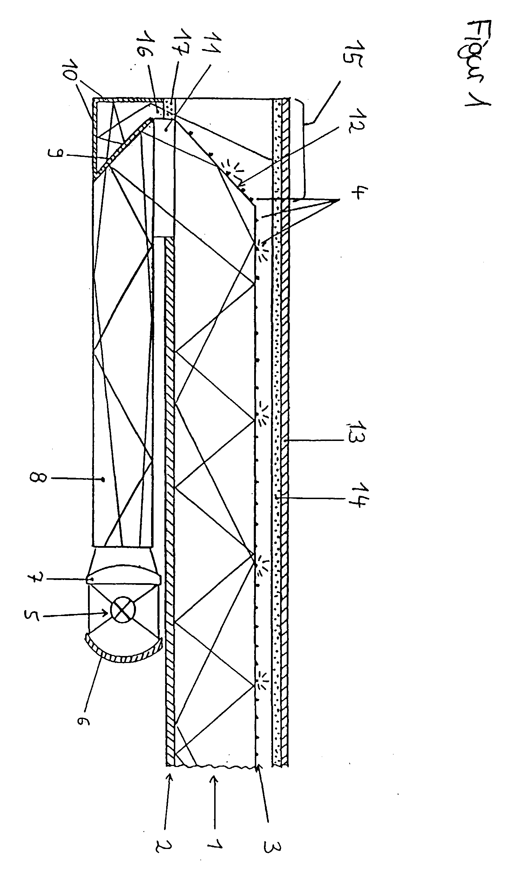

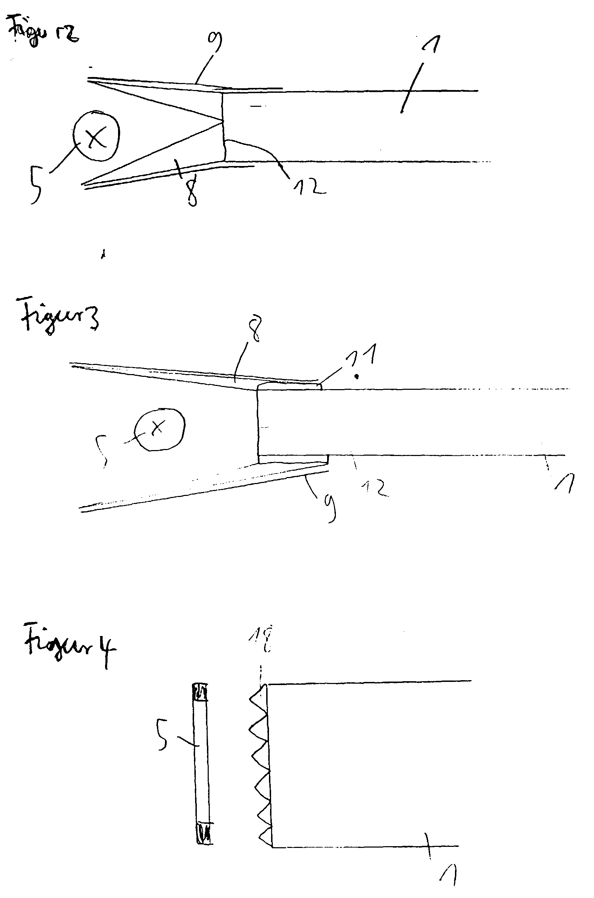

Die Ausgestaltung gemäß Figur 2 bietet den Vorteil, daß von den beiden keilförmig ausgeführten Lichtleitern wesentlich mehr Licht aufgenommen und der Stirnseite der Platte zugeführt wird, da der Raumwinkel, unter dein Licht in das lichtleitende Medium eintritt, gegenüber den oben angegebenen Ausführungen vergrößert ist. Wie es dem Fachmann geläufig ist, wird in dein keilförmigen Lichtleiter das Licht in Richtung auf die größere Öffnung, d. h. zur Stirnseite der Platte, hingeleitet und tritt dort auf der gesamten Breite bzw. Höhe der Stirnseite in die Platte ein.

Alternativ dazu können die Lichtleiter auch gemäß Figur 3 ausgeführt sein, um das Licht randseitig von oben und unten in die Platte einzukoppeln. Dabei kann auch durch die Stirnseite der Platte selbst Licht eintreten.

Weiterhin wird vorgeschlagen, die Stirnseite der Platte, durch die das Licht eintritt, mit Linsen und/oder Prismen zu versehen, die ebenfalls ein lichtleitendes Medium darstellen und aufgrund ihrer optischen Eigenschaften das von der Lichtquelle ausgesandte Licht einfangen und/oder bündeln und der Platte zuführen. Besonders in Randbereichen wird diese Ausgestaltung von Vorteil sein, da das von einer einzigen, beispielsweise mittig angeordneten Lichtquelle ausgesandte Licht am Rand streifend auf eine ebene Stirnseite treffen und fast vollständig reflektiert wurde. Mit Hilfe eines Prismas, das über gegen die Stirnseite geneigte Flächen verfügt, wird ein günstigerer Einfallwinkel erhalten, unter dem das Licht eintritt und in Richtung auf die Stirnseite gebrochen wird.

In bevorzugter Ausbildung der Erfindung werden die Abmessungen des Leuchtkörpers derart gewählt, daß die planparallele Platte seine gesamte Grundfläche überdeckt. Auf diese Weise lassen sich erfindungsgemäße Leuchtkörper ohne Zwischenraum zwischen den Leuchtflächen nebeneinander positionieren. Bei geeigneter, insbesondere rechteckiger oder quadratischer, Formgebung der planparallelen Platten lassen sich die erfindungsgemäßen Leuchtkörper damit zu beliebig großen Leuchtflächen kombinieren.

Als preiswertes und beständiges transparentes Material für die planparallele Platte und/oder das lichtleitende Medium schlägt die Erfindung transparenten Kunststoff, insbesondere Polymethylmethacrylat (PMMA) vor.

Als Lichtquelle für den erfindungsgemäßen Leuchtkörper wird in einer besonders vorteilhaften Ausbildung der Erfindung die Verwendung einer stabförmigen Lichtquelle, insbesondere eine Leuchtstoffröhre empfohlen, die von ihrer äußeren Gestaltung her für die hier erforderliche gleichmäßige Ausleuchtung eines Streifens besonders geeignet ist und überdies die Vorzüge einer langen Lebensdauer, sowie einer, verglichen mit Glühlampen, geringeren Leistungsaufnahme und Abwärme besitzt. Hohe Standzeiten, geringer Wartungsaufwand und niedrige Betriebskosten sind die vorteilhaften Folgen. Mit Hilfe des lichtleitenden Mediums wird das Licht der Leuchtstoffröhre derart aufgeweitet, daß auch ihre Sockelbereiche an der Stirnseite vollständig ausgeleuchtet sind. Alternativ dazu können als einfach und billige Leuchtquellen auch LEDs oder Glühbirnen verwendet wreden, die z. B. einen schnellen Wechsel der Lichtfarbe ermöglichen.

Für einen wirtschaftlichen Betrieb des erfindungsgemäßen Leuchtkörpers ist es weiterhin erforderlich, durch geeignete Maßnahmen sicherzustellen, daß ein möglichst hoher Anteil des von der Lichtquelle emittierten Lichtes in die planparallele Platte eingekoppelt wird. Hierfür empfiehlt die Erfindung die Verwendung von kondensorartig wirkenden Optiken aus Reflektoren und Linsen an der Lichtquelle, die ihren Lichtstrom bündeln und in das lichtleitende Medium einkoppeln. Beim Einsatz einer stabförmigen Lichtquelle kommt hier beispielsweise die Verwendung einer Zylinderlinse in Betracht.

Als weitere Maßnahme schlägt die Erfindung die Verbindung von lichtleitender Medium und planparalleler Platte durch eine optische Koppelschicht vor, die an die Brechungsindizes beider Medien angepaßt ist und so die Reflexionsverluste an den Grenzflächen reduziert und dadurch die Einkopplung des Lichtstromes in die Platte verbessert.

Als lichtleitendes Medium können insbesondere auch Lichtleiterfasern verwendet werden, von denen allerdings der Einsatz eines ganzen Bündels erforderlich ist, um die planparallele Platte in ihrer vollen Breite auszuleuchten. Die Lichtleitfasern dienen dann zur Umlenkung des Lichtes zur Einkoppelstelle.

Besonders empfehlenswert ist, die Lichtleitfasern bogenförmig herumzuführen, so daß sie an der Stirnseite der Platte enden. Die Funktion der Lichtleitfasern besteht dann nicht nur in einem weitgehenden und verlustfreien Übertragen des Lichtes ausgehend von der Lichtquelle bis hin zur Platte, sondern zusätzlich auch in einer Umlenkung des Lichtes auf die Stirnseite der Platte zu, so daß der Einsatz eines die entsprechende Funktion erfüllenden Reflektors nicht erforderlich ist. Die Lichtleitfasern bewirken dann auch das Umlenken des Lichtes auf die Platte zu.

In einer alternativen Ausführungsform wird als lichtleitendes Medium ein Lichtkanal vorgeschlagen. Im Inneren dieses Kanales wird dann das Licht ausgehend von der Lichtquelle auf die Stirnseite der Platte bzw. auf den Reflektor zugeleitet. Unter Lichtkanal werden alle Anordnungen verstanden, in deren Inneren eine Ausbreitung des von der Lichtquelle ausgehenden Lichtes erfolgt. Im Vergleich zu Lichtleitern sind die hierbei durch Absorption auftretenden Verluste zweifellos höher, jedoch bietet der Lichtkanal den Vorteil einer wesentlich geringeren Masse, was im Hinblick auf das Gewicht von Vorteil ist.

Die Aufgabe des Reflektors besteht in der Umleitung des Lichtes zur Einkoppelstelle hin. Er kann sich über die gesamte Stirnseite des Leuchtkörpers erstreckend verlaufen und die bodenseitig über das lichtleitende Medium herangeführten Lichtstrahlen umzulenken und stirnseitig in die Platte einzugeben. Als spezielle Ausführungsform werden zylinderförmige Reflektoren angesehen, die über die gesamte Breite, d. h. Stirnseite, des Leuchtkörpers angeordnet sind und eine gleichmäßige Ausleuchtung über die gesamte Breite garantieren. In einer ebenfalls bevorzugten Ausgestaltung besitzt der Reflektor einen elliptischen Querschnitt und somit zwei Brennpunkte. Man erhält eine optimale Lichtübertragung dadurch, daß einer der Brennpunkte in die obere Platte hineingelegt ist. Der segmentartige Aufbau des Reflektors ist deshalb bevorzugt, da dessen Herstellung vergleichsweise einfach mit Hilfe einer Blechbiegemaschine vorgenommen werden kann.

Als besonders einfache und kostengünstige Lösung zur Unterbringung des Reflektors, der das Licht der Lichtquelle zur Einkoppelstelle umleitet, empfiehlt die Erfindung eine entsprechende Ausbildung der angrenzenden Stirnseite des lichtleitenden Mediums, die dazu um einen geeigneten Winkel geneigt und mit einer reflektierenden Schicht auf ihrer Rückseite versehen werden muß, wie es vom Fachmann ausgeführt werden kann.

Alternativ kann der Reflektor zur Umlenkung des Lichtstromes auch am Rand des Leuchtkörpers im Abstand zur Stirnseite der Platte angeordnet sein und beispielsweise das von unten kommende Licht in die Horizontale umlenken. Bei dieser Ausgestaltung ist allerdings eine unmittelbare Aneinanderreihung der Leuchtkörper nicht möglich.

Diese Unterbringung des Reflektors, bei der zumindest ein Teil des Lichtes am Rand des Leuchtkörpers aus dem lichtleitenden Medium austritt, bietet die Möglichkeit, den an die Einkoppelstelle angrenzenden problematischen Rand der Leuchtfläche separat auszuleuchten. Hierfür wird in einer Fortbildung eine Öffnung zwischen planparalleler Platte und Rand des Leuchtkörpers eingebracht, durch die ein Teil des Lichtes der Lichtquelle auf die Leuchtfläche trifft. Damit läßt sich die Beleuchtung des Randes der Leuchtfläche über die Abmessungen dieser Öffnung einstellen und an die Ausleuchtung der restlichen Leuchtfläche anpassen.

Es ist aber auch eine Kombination beider Reflektoranordnungen denkbar. Dabei wird die Stirnseite des lichtleitenden Mediums mit einer teilreflektierenden Schicht versehen, der einen Teil des einfallenden Lichtes der Lichtquelle zur Einkoppelstelle der planparallelen Platte hin umlenkt, während der durch die Schicht hindurchgehende Teil des Lichtes auf einen zweiten, im Abstand zur Stirnfläche des lichtleitenden Mediums montierten, spiegelnd oder diffus reflektierenden Reflektor trifft, über den die Öffnung zur Ausleuchtung des Randes beleuchtet wird.

Eine besonders gleichmäßige Ausleuchtung der Randzone läßt sich durch Einbau einer Streuscheibe in die Öffnung zwischen planparalleler Platte und Rand des Leuchtkörpers erzielen.

Eine vorteilhafte Ausgestaltung der Erfindung besteht darin, die Stirnseite, an der das Licht in die Platte eingekoppelt wird, gegen die Vertikale zu neigen. Die Lichtquelle selbst kann dabei derart ausgerichtet werden, daß ihre optische Achse senkrecht auf der Stirnseite steht, es ist aber auch denkbar, sie im Winkel zur Stirnseite anzuordnen, am einen streifenden Einfall des Lichts in die Platte zu erhalten, um eine optimale Lichtausbeute und eine gleichmäßigere Ausleuchtung zu erzielen.

Vorteilhafterweise ist die Lichtquelle verschwenkbar und festlegbar, relativ zur Stirnseite der Platte, gelagert, um das Licht unter verschiedenen Winkel in die Platte eintreten zu lassen. Damit kann beispielsweise erreicht werden, daß das Licht, je nach Einfallswinkel, verstärkt an der Ober- oder Unterseite der Platte wieder aus ihr austritt.

Weitere Einzelheiten, Merkmale und Vorteile der Erfindung sind dem nachfolgenden Beschreibungsteil zu entnehmen, in dem anhand von Zeichnungen Ausführungsbeispiele der Erfindung näher erläutert sind. Es zeigen:
- **Figur 1**: einen Leuchtkörper mit einer Lichtquelle unterhalb der Platte,
- **Figur 2**: einen Leuchtkörper mit einer Lichtquelle seitlich der Platte,
- **Figur 3**: einen weiteren Leuchtkörper mit einer Lichtquelle seitlich der Platte,
- **Figur 4**: einen Leuchtkörper mit Prismen an der Stirnseite in Draufsicht.

Bei der in Figur 1 abgebildeten Darstellung im Querschnitt handelt es sich um einen Leuchtkörper mit einer Lichtquelle, die unterhalb der Platte angeordnet ist. Kernstück ist die lichtdurchlässige, planparallele Platte (1), die beispielsweise aus transparentem PMMA besteht und an ihrer Unterseite (2) verspiegelt ist. An ihrer Oberseite (3) weist sie eine lichtbrechende rasterförmige Oberflächenstruktur auf, die aus einer Vielzahl von einzelnen Punkten oder Strichen besteht und einen stellenweisen definierten Lichtaustritt ermöglicht. Unterhalb der Platte (1) ist die stabförmige Lichtquelle (5) angordnet, deren Licht über einen Reflektor (6) und eine als Kondensor wirkende Zylinderlinse (7) in das aus PMMA bestehende lichtleitende Medium (8) eingekoppelt wird. Der Lichtstrom wird über den aus einer teilreflektierenden Schicht auf der Stirnseite des lichtleitenden Mediums (8) bzw. den Reflektor (10) zur optischen Koppelschicht (11) geführt, durch die er nahezu verlustfrei in die planparallele Platte (1) eintritt. Nach Reflexion an der als Reflektor ausgebildeten Stirnseite (12) der planparallelen Platte (1) kann sich das Licht durch Vielfachreflexion an Oberseite (3) und Unterseite (2) im gesamten Plattenvolumen ausbreiten. An den einzelnen Oberflächenrasterelementen (4) tritt ein Teil des Lichtes aus der planparallelen Platte (1) aus und beleuchtet die auf die eigentliche Leuchtplatte (13) aufgebrachte Streuschicht (14), die die durch das Raster der Oberflächenstrukturelemente (4) beeinflußte Lichtverteilung glättet und dadurch die Leuchtscheibe (13) völlig gleichmäßig ausleuchtet. Zur Ausleuchtung des Randbereiches (15) der Streuschicht (14) dienen Oberflächenstrukturelemente (4) auf der als Reflektor ausgebildeten Stirnseite (12) der planparallelen Platte (1). Zusätzlich ist zwischen planparallele Platte (1) und Rand des Leuchtkörpers eine Öffnung (16) angebracht, durch die ein Teil des Lichtes aus dem lichtleitenden Medium (8) direkt den Randbereich (15) erreicht. Eine zusätzliche Streuscheibe (17) in der Öffnung (16) erhöht die Homogenität der Ausleuchtung des Randbereiches (15) der Leuchtfläche (13). Zur Verdeutlichung ist der Verlauf einiger Lichtstrahlen in der Zeichnung exemplarisch dargestellt.

Gemäß der Figur 2 ist der Leuchtkörper derart ausgeführt, daß die Lichtquelle (5) seitlich beabstandet zur Stirnseite (12) der Platte (1) angeordnet ist, und das von ihr ausgehende Licht mit Hilfe von zwei keilförmigen Lichtleitern (8) zur Stirnseite (12) geführt wird. Um Verluste zu vermeiden, sind die Rückseiten der Lichtleiter (8) mit Reflektoren (9) versehen. Bei dieser Ausgestaltung ist der Raumwinkel, unter dem das ausgesandte Licht auf die lichtleitenden Medien (8) trifft, wesentlich vergrößert, und es wird eine größere Lichtstärke in der Platte (1) erreicht.

Eine ähnlich vorteilhafte Ausführung ist in Figur 3 dargestellt. Hier koppeln die Lichtleiter (8) das Licht randseitig von oben und unten in die Platte (1) ein. Sie sind ebenfalls mit Reflektoren (9) versehen, und zur Vermeidung störender Reflexionen ist eine optische Koppelschicht (11) zwischen ihnen und der Platte (1) eingebracht. Das Licht kann hier auch unmittelbar durch die vertikale Stirnseite (12) in die Platte (1) eintreten und die Lichtstärke erhöhen.

Bei dein in Figur 4 dargestellten Leuchtkörper ist die Lichtquelle (5) eine Leuchtstoffröhre, und die Stirnseite (12) der Platte (1) ist mit mehreren Prismen (18) versehen, die ein lichtleitendes Medium (8) sind. Besonders in den Randbereichen trifft das Licht streifend auf eine ebene Stirnseite (12) und würde reflektiert. Die dagegen geneigten Flächen der Prismen (18) jedoch stehen relativ dazu in einem günstigen Winkel und lenken die Lichtstrahlen ins Platteninnere. Wie es dem Fachmann aus der Optik bekannt ist, wird bei geeigneter Wahl der Winkel des Prismas (18) ein Bündel praktisch paralleler Lichtstrahlen erzeugt, die die Platte (1) gleichmäßig ausleuchten.

Im Ergebnis erhält man einen Leuchtkörper zur rückwärigen Beleuchtung durchleuchtungsfähiger Bilder mit einer sehr gleichmäßig ausgeleuchteten Leuchtfläche, bei dem die gesamte Oberseite nutzbar ist und der sich mit weiteren gleichartigen Leuchtkörpern zu beliebig großen Leuchtflächen kombinieren läßt.

## Patentansprüche

1. Leuchtkörper für durchleuchtungsfähige Bilder, wie Filmbetrachter, Hinterbildleuchte, Zeichnungsdurchleuchter oder Lichtschild, mit einer lichtdurchlässigen, im wesentlichen planparallelen Platte, in die das Licht einer oder mehrerer Lichtquellen in Randnähe eingekoppelt wird und in der sich das Licht unter Vielfachreflexion an Ober- und Unterseite der Platte verteilt, wobei die Ober- und/oder Unterseite eine lichtbrechende rasterförmige Oberflächenstruktur zum stellenweise definierten Lichtaustritt aufweist, die sich mit zunehmendem Abstand von der Einkoppelstelle vergrößert,
**dadurch gekennzeichnet, daß**
- oberhalb der Plattenoberseite eine mit einer Streuschicht versehene Leuchtfläche befestigt ist,
- die Lichtquelle (5) zur Einkoppelstelle beabstandet ist,
- ein lichtleitendes Medium (8) zwischen Einkoppelstelle und Lichtquelle (5) angeordnet ist.

2. Leuchtkörper nach Anspruch 1, **dadurch gekennzeichnet,** daß auf der Ober- (3) und/oder Unterseite (2) der Platte (1) eine mit einer Streuschicht (14) versehene Leuchtfläche (13) befestigt ist.

3. Leuchtkörper nach Anspruch 1, **dadurch gekennnzeichnet,** daß die Lichtquelle (5) unterhalb der Platte (1) angeordnet ist, und ggf. zusätzlich die Stirnseite (12) der Platte (1) gegen die Vertikale geneigt ist.

4. Leuchkörper nach Ansprch 1 oder 3, **dadurch gekennzeichnet,** daß an der Stirnseite (12) benachbart zur Lichtquelle (5) eine oder mehrere lichtleitende Keile (8) angebracht sind und deren Rückseite ggf. als Reflektor (9) ausgebildet ist.

5. Leuchtkörper nach einem der vorhergehenden Ansprüche, **dadurch gekennzeichnet,** daß am Rand der Platte (1) an Ober- und/oder Unterseite der Platte einer oder mehrere lichtleitende Keile (8) angebracht sind und deren Rückseite ggf. als Reflektor (9) ausgebildet ist.

6. Leuchtkörper nach einem der vorhergehenden Ansprüche, **dadurch gekennzeichnet,** daß an der Stirnseite (12) der Platte (1) Linsen oder Prismen (18) angebracht sind.

7. Leuchtkörper nach einem der vorhergehenden Ansprüche, **dadurch gekennzeichnet,** daß die planparallele Platte (1) die gesamte Grundfläche des Leuchtkörpers überdeckt.

8. Leuchtkörper nach einem der vorhergehenden Ansprüche, **dadurch gekennzeichnet,** daß die planparallele Platte (1) und/oder das lichtleitende Medium (8) aus transparentem Kunststoff, insbesondere Polymethacrylat (PMMA) bestehen.

9. Leuchtkörper nach einem der vorhergehenden Ansprüche, **gekennzeichnet durch** eine stabförmige Lichtquelle (5), insbesondere eine Leuchtstoffröhre, oder die Lichtquelle (5) eine Glühlampe oder eine LED ist.

10. Leuchtkörper nach einem der vorhergehenden Ansprüche, **gekennzeichnet durch** kondensorartig wirkende Optiken (6, 7) an der Lichtquelle, die den Lichtstrom der Lichtquelle (5) bündeln und in das lichtleitende Medium (8) einkoppeln.

11. Leuchtkörper nach einem der vorhergehenden Ansprüche 2, **dadurch gekennzeichnet,** daß eine optische Koppelschicht (11) zwischen lichtleitendem Medium (8) und planparalleler Platte (1) an der Einkoppelstelle angeordnet ist.

12. Leuchtkörper nach einem der vorhergehenden Ansprüche, **dadurch gekennzeichnet,** daß das lichtleitende Medium (8) aus Lichtleiterfasern besteht.

13. Leuchtkörper nach Anspruch 12, **dadurch gekennzeichnet,** daß die Lichtleitfasern zur Stirnseite der Platte (1) umgebogen sind.

14. Leuchtkörper nach einem der vorhergehenden Ansprüche, **dadurch gekennzeichnet,** daß das lichtleitende Medium (8) ein Lichtkanal ist.

15. Leuchtkörper nach einem der vorhergehenden Ansprüche, **dadurch gekennzeichnet,** daß der das Licht zur Einkoppelstelle hin umleitende Reflektor (9) zylinderförmig ist oder einen elliptischen Querschnitt hat oder segmentweise aufgebaut ist.

16. Leuchtkörper nach einem der vorhergehenden Ansprüche, **dadurch gekennzeichnet,** daß der Reflektor (9), der das Licht zur Einkoppelstelle hin umleitet, auf eine entsprechend geneigte Stirnseite des lichtleitenden Mediums (8) aufgebracht ist.

17. Leuchtkörper nach einem der vorhergehenden Ansprüche, **dadurch gekennzeichnet,** daß der Reflektor (9) am Rand des Leuchtkörpers im Abstand zu der Stirnfläche des lichtleitenden Mediums (8) angeordnet ist.

18. Leuchtkörper nach Anspruch 17, **gekennzeichnet durch** eine Öffnung (16) zwischen planparalleler Platte (1) und Rand des Leuchtkörpers, durch die ein Teil des Lichtes auf die Leuchtfläche trifft.

19. Leuchtkörper nach Anspruch 18, **gekennzeichnet durch** eine teilreflektierende Schicht auf der Stirnfläche des lichtleitenden Mediums (8).

20. Leuchtkörper nach Anspruch 18 oder 19, **gekennzeichnet durch** eine Streuscheibe (17) in der Öffnung (16).

21. Leuchtkörper nach einem der vorhergehenden Ansprüche, **dadurch gekennzeichnet,** daß die Stirnseite (12) der Platte (1) gegen die Vertikale geneigt ist und/oder die optische Achse der Lichtquelle (5) nicht senkrecht auf der Stirnseite (12) steht.

22. Leuchtkörper nach einem der vorhergehenden Ansprüche, **dadurch gekennzeichnet,** daß die Lichtquelle verschwenkbar und festlegbar um die Achse senkrecht zur Stirnseite (12) der Platte (1) gelagert ist.
